# EUROPÄISCHE PATENTSCHRIFT

(11) **EP 0 522 351 B1**
(45) Veröffentlichungstag und Bekanntmachung des Hinweises auf die Patenterteilung: **19.02.1997**
(21) Anmeldenummer: 92110610.0
(22) Anmeldetag: 24.06.1992
(51) Int. Cl.: C08F 285/00, C08L 51/06

(54) **Schlagzäh-Modifizierungsmittel**
Impact modifier
Agent pour la modification de la résistance à l'impact

(30) Priorität: 29.06.1991 DE 4121652
(43) Veröffentlichungstag der Anmeldung: 13.01.1993
(73) Patentinhaber: Röhm GmbH, 64293 Darmstadt (DE)
(72) Erfinder: Rhein, Thomas, Dr., W-6501 Stadecken-Elsheim (DE); Süfke, Thomas, Dr., W-6101 Rossdorf (DE); Müller, Reiner, W-6083 Biebesheim (DE)

(56) Entgegenhaltungen:
- EP-A- 0 040 543
- DE-A- 2 324 316
- DE-A- 3 300 526
- FR-A- 2 189 440
- US-A- 4 521 568

## Beschreibung

Die Erfindung betrifft mehrstufige Emulsionspolymerisate, die vorwiegend zur Abmischung mit harten und verhältnismäßig spröden Kunststoffen vorgesehen sind, um deren Zähigkeitseigenschaften zu verbessern. Sie werden häufig als Schlagzähmodifizierungsmittel bezeichnet, obwohl sie auch allein als Formmasse zur Herstellung von schlagzähen Formkörpern, und Folien verwendet werden können. Eine grundlegende Forderung an das Schlagzäh-Modifizierungsmittel ist optische Klarheit, denn nur unter dieser Voraussetzung kann eine modifizierte Formmasse von optischer Klarheit erhalten werden.

Ihr grundsätzlicher Aufbau aus einem harten Kern, einer elastomeren Zwischenstufe auf Basis eines Acrylester-Polymerisats und einer harten, nicht elastomeren Endstufe ist im Oberbegriff des Patentanspruchs angegeben. Es wird angenommen, daß die Polymerisate der Zwischenstufe und der Endstufe schalenförmig um den Kern angeordnet sind.

### Stand der Technik

Durch Emulsionspolymerisation hergestellte Schlagzähmodifizierungsmittel aus einem elastomeren Kern und einer harten, nicht-elastomeren Schale sind in großer Zahl aus dem Stand der Technik bekannt. Zur Angleichung an den optischen Brechungsindex der harten Phase ist die elastomere Phase neben Acrylestern meistens teilweise aus einem vinylaromatischen Monomer, wie Styrol oder Benzylacrylat aufgebaut; vgl. FR-A 2 189 440.
Benzylacrylat geht aus dieser Druckschrift als technisch gleichwertig mit Styrol hervor. Da es aber wesentlich teurer als Styrol ist, wird es in der Praxis für diesen Zweck nicht verwendet. Vergleichsversuche, die am Schluß der Beschreibung in den Einzelheiten wiedergegeben sind, haben gezeigt, daß bei einem zweiphasigen Schlagzäh-Modifizierungsmittel mit elastomerem Kern kein Einfluß auf die Schlagzähigkeit beim Ersatz von Styrol durch Benzylacrylat festzustellen ist.

Gemäß US-A 3 661 994 wurde eine Verbesserung dieser Emulsionspolymerisate dadurch erreicht, daß man als erste Stufe des Emulsionspolymerisats einen harten Kern erzeugt und durch zwei nachfolgende Polymerisationsstufen eine elastomere und eine harte Schale erzeugte. Die elastomere Phase ist durch mehrfunktionelle Vinylmonomere vernetzt.

In der DE-A-23 24 316 wird ein Pfropfpolymerisat beschrieben, das nach dem Verfahren der Emulsionspolymerisation ausgehend von einem Latex aus einem vernetzten "harten" Harz, auf welchen eine Zähphase aufpolymerisiert wurde, und abschliessender Polymerisation mindestens einer aromatischen Vinylverbindung zusammen mit Acrylnitril oder einem Acrylester hergestellt wird. Vorzugsweise soll das vernetzte, "harte" Harz mit der zuletzt aufpolymerisierten Phase identisch sein. Andererseits ist ein Polymethylmethacrylat- Kern und folglich auch eine solche Aussenphase nicht intendiert.

Wenn die elastomere Phase allein aus Alkylacrylaten und vernetzenden Monomeren aufgebaut ist, hat sie in der Regel einen etwas niedrigeren optischen Brechungsindex als die harten Phasen des Kerns und der Endstufe. Das führt zu einer Ablenkung des Lichtes an den Phasengrenzflächen und zur Bildung von Streulicht, was zur Folge hat, daß das Material trüb bis weiß erscheint, wenn es zu einer zusammenhängenden Masse verschmolzen wird. Um diese unerwünschte Erscheinung zu vermeiden, wird häufig in die elastomere Phase ein kleiner Anteil Styrol eingebaut, um den optischen Brechungsindex der Zähphase an den der Hartphase anzupassen und auf diese Weise eine Trübung des Materials durch Lichtstreuung an den Grenzflächen der Zähphasenteilchen zu vermeiden.

Elektronenmikroskopische Aufnahmen haben gezeigt, daß die elastomere Phase der Zwischenstufe oft nicht als deutlich abgetrennte Phase ausgebildet ist, sondern mehr oder weniger stark mit dem Material des Kerns vermischt vorliegt. Dies wird auf die Quellung des Kerns mit den Monomeren der elastomeren Phase bei der zweiten Polymerisationsstufe zurückgeführt. Daher steht ein Teil der Elastomerphase nicht in der gewünschten Weise für die Energiedissipation bei Schlagbeanspruchung zur Verfügung, so daß nur eine begrenzte Verbesserung der Kerbschlagzähigkeit erreicht wird.

### Aufgabe und Lösung

Die Erfinder haben sich die Aufgabe gestellt, die Kerbschlagzähigkeit der gattungsmäßigen Emulsionspolymerisate, insbesondere bei Kälte, zu verbessern und dabei optische Klarheit zu gewährleisten. Sie führen die unscharfe Trennung der Kernphase und der Elastomerphase auf die unterschiedlichen Reaktivitäten von Acrylestern und Styrol bei der Emulsionspolymerisation zurück. Ein bloßer Verzicht auf Styrol konnte wegen der Notwendigkeit der Brechungsindexangleichung nicht in Betracht gezogen werden. Es wurde gefunden, daß bei einem Ersatz des Styrols durch ein Arylalkylacrylat oder -methacrylat sowohl die gewünschte Brechungsindexangleichung als auch eine scharfe Trennung von Kern- und Elastomerphase erreicht werden. Dies ist nicht nur am elektronenmikroskopischen Bild des neuen Emulsionspolymerisats, sondern vor allem an der Verbesserung der Kerbschlagzähigkeit zu erkennen. Gegenstand der Erfindung ist daher ein Schlagzäh-Modifizierungsmittel für thermoplastische Kunststoffe, das gattungsmäßig aus einem wenigstens dreiphasigen Emulsionspolymerisat besteht und
A) einen harten Kern aus einem gegebenenfalls vernetzten Polymethylmethacrylat
B) eine in Gegenwart des Kernmaterials erzeugte Elastomerphase mit einer Glasübergangstemperatur nicht über -10°C, die aufgebaut ist aus
   a) einem Alkylester der Acrylsäure mit 1 bis 8 Kohlenstoffatomen im Alkylrest,
   b) wenigstens einem vernetzenden Comonomeren mit zwei oder mehr polymerisierbaren Doppelbindungen im Molekül,
   c) wenigstens einem Arylalkyl(meth)acrylat in Anteilen von 15-45 Gew.-% bezogen auf die Elastomerphase und
C) eine in Gegenwart der Elastomerphase erzeugte Hartphase aus einem Homo- oder Copolymerisat von äthylenisch ungesättigten, radikalisch polymerisierbaren Monomeren mit einer Glasübergangstemperatur von wenigstens 50°C
enthält.

Vorzugsweise ist das Emulsionspolymerisat zu 5 bis 40 Gew.-% aus der Komponente A, zu 25 bis 75 Gew.-% aus der Komponente B und zu 20 bis 60 Gew.-% aus der Komponente C aufgebaut. Weitere bevorzugte Ausführungsformen sind in den Ansprüchen 2,5 und 6 definiert.

Die als Figuren I und II beigefügten elektrononmikroskopischen Aufnahmen zeigen in 50.000-facher Vergrößerung
I) Latexteilchen gemäß dem Stand der Technik (Handelsprodukt PLEXIGLAS® ZK6A, Röhm GmbH) mit Polymethylmethacrylat als Hartphase und einer aus Butylacrylat und Styrol aufgebauten vernetzten Elastomerphase mit einer Glasübergangstemperatur von etwa -20°C,
II) Latexteilchen gemäß der Erfindung mit Polymethylmethacrylat als Hartphase und einer aus 72 Gew.-% Butylacrylat, 27 Gew.-% Benzylacrylat und 1 Gew.-% vernetzenden Monomeren aufgebauten Elastomerphase mit einer Glasübergangstemperatur von -27°C. (Herstellung gemäß Beispiel 2)

In beiden Fällen waren die Brechungsindizes der Hart- und Elastomerphasen aneinander angeglichen. An Formmassen, die durch Abmischung einer handelsüblichen Polymethylmethacrylat-Formmasse (PLEXIGLAS® Y7N, Röhm GmbH) mit den Emulsionspolymerisaten I und II hergestellt worden waren, wurden folgende Eigenschaften ermittelt: mit Rutheniumoxid behandelt, wobei nur die Elastomerschicht als schwarze Fläche sichtbar wird. Die äußere Hartphasenschicht C ist mit der PMMA-Formmasse verschmolzen und daher als solche nicht mehr erkennbar.

In beiden Fällen waren die Brechungsindizes der Hart- und Elastomerphasen aneinander angeglichen. An Formmassen, die durch Abmischung einer handelsüblichen Polymethylmethacrylat-Formmasse (PLEXIGLAS® 7N, Röhm GmbH) mit den Emulsionspolymerisaten I und II hergestellt worden waren, wurden folgende Eigenschaften ermittelt:

**Tabelle 1**

| Emulsionspolymerisat | I | II |
|---|---|---|
| Gew.-% Butylacrylat-Einheiten in der Formmasse | 15 | 14 |
| Vicat-Erweichungs-Temperatur (ISO 303) | 98°C | 97°C |
| Izod-Kerbschlagzähigkeit in kJ/qm (ISO 180 1A) | | |
| bei 23°C | 5,9 | 6,3 |
| bei -10°C | 3,6 | 4,7 |
| bei -20°C | 2,8 | 3,4 |
| Trübung (Haze-Wert in %), 23°C | 2,3 | 3,6 |
| 40°C | 3,1 | 3,4 |

Im Hinblick auf die etwa gleichen Glasübergangstemperaturen und den vergleichbaren Gehalt an Butylacrylateinheiten können die beiden Emulsionspolymerisate als anwendungstechnisch vergleichbar angesehen werden. Dies gilt auch für die auf einem günstigen Niveau liegenden Werte der Trübung und des Weißbruchs (Tab. 3). Produkte mit einem Trübwert unter 10, insbesondere unter 6, gemessen bei 23°C mittels eines Haze-Meßgeräts vom Typ Hunterlab No. D29-9, werden als optisch klar angesehen. Eine überraschende Verbesserung zeigt sich jedoch für das erfindungsgemäße Emulsionspolymerisat bei der Kerbschlagzähigkeit, insbesondere in der Kälte. In den sogenannten Weißbrucheigenschaften, d.h. der Ausbildung weißer Stellen bei Schlagbeanspruchung, erweisen sich die erfindungsgemäßen Formmassen II den bekannten Massen I als leicht überlegen.

### Das Emulsionspolymerisat

Dem Schlagzäh-Modifizierungsmittel der Erfindung liegt ein wenigstens dreiphasiges Emulsionspolymerisat zugrunde, das als solches oder in Abmischung mit einer anderen Formmasse zu geformten Erzeugnissen verarbeitet werden kann. Der Einbau weiterer Phasen im Interesse zusätzlicher Effekte ist nur insoweit möglich, wie dadurch nicht die besonderen Vorteile der erfindungsgemäßen Produkte zunichte gemacht werden.

Die Auswirkung der Arylalkylester auf die Schlagzähigkeit ist eine Eigenart der wenigstens dreiphasigen Emulsionspolymerisate. Vergleichsversuche haben erwiesen, daß sich der Austausch von Styrol gegen Benzylacrylat in zweiphasigen, nur aus einem elastomeren Kern und einer harten Schale aufgebauten Emulsionspolymerisaten nicht auf die Schlagzähigkeit auswirkt.

Der Kern und die harte Schale des Emulsionspolymerisats bestehen jeweils aus harten Polymerisaten, die bei Raumtemperatur noch deutlich unterhalb ihres elastischen oder plastischen Zustandes vorliegen. Ihre Glastemperaturen liegen in der Regel deutlich über 10^{o}C, vorzugsweise über 50^{o}C, insbesondere über 70^{o}C. Abgesehen davon, daß der Kern gegebenenfalls vernetzt und die harte Schale unvernetzt sind, können die beiden Polymerisate aus gleichen oder ähnlichen äthylenisch ungesättigten, radikalisch polymerisierbaren Monomeren oder Gemischen davon aufgebaut sein. Methylmethacrylat ist vorzugsweise zu wenigstens 50 Gew.-% beteiligt oder wird -im Kern gegebenenfalls zusammen mit einem vernetzenden Monomer - allein verwendet. Als Comonomere können gegebenenfalls niedere Alkylacrylate, insbesondere solche mit 1 bis 7 C-Atomen im Alkylrest, bis zu einem Anteil bis 30 Gew.-%, bezogen auf die harte Schale, enthalten sein. Wenn der Kern vernetzt ist, bildet das vernetzende Monomer in der Regel einen Anteil von 0,1 bis 10 Gew.-% des Kerns.

Die Elastomerphase ist in der Regel zu mindestens 50, vorzugsweise zu mehr als 60 Gew.-%, aus Alkylacrylaten oder -methacrylaten aufgebaut. Die Acrylate lassen niedrigere Glasübergangstemperaturen der Elastomerphase erreichen und sind deshalb bevorzugt; Beispiele sind Ethyl-, Propyl-, n-Butyl- oder 2-Ethylhexylacrylat. Der Anteil der Arylalkylacrylate bzw. -methacrylate wird so hoch gewählt, daß die optischen Brechungsindizes der Hart- und Elastomerphase aneinander angeglichen sind, was daran zu erkennen ist, daß das Emulsionspolymerisat einen Trübungswert (Haze) von 10 nicht überschreitet. Der Unterschied der Brechungsindizes der Phasen ist in der Regel < 0,001. Dabei wird natürlich vorausgesetzt, daß die gemessene Trübung nicht auf andere Ursachen als den Brechungsindex-Unterschied zwischen der Phasen zurückgeht, beispielsweise auf Verunreinigungen. Zur Anpassung des Brechungsindex ist ein Anteil von 15 bis 45 Gew.-% der Arylalkylacrylate oder -methacrylate erforderlich sein. Geeignete Arylalkylacrylate sind z.B. Benzyl-, Phenylethyl-, Phenylpropyl-, Phenylpentyl- oder Phenylhexyl-acrylat.

Die beiden Monomerkomponenten (a) und (b) bestimmen im wesentlichen die Glasübergangstemperatur der Elastomerphase, die nicht über -10^{o}C, vorzugsweise zwischen -15 und -40^{o}C, liegt. Sofern die geforderte Glastemperatur erreicht wird, können andere radikalisch polymerisierbare aliphatische Comonomere, die mit den Alkylacrylaten und den Arylalkylacrylaten oder -methacrylaten copolymerisiert werden können, gegebenenfalls mitverwendet werden, wie aus dem Stand der Technik bekannt ist. Jedoch sollen andere aromatische Comonomere, wie Styrol, alpha-Methylstyrol oder Vinyltoluol, möglichst ausgeschlossen bleiben.

Ein wesentlicher Bestandteil der Elastomerphase ist ein ausreichender Anteil an vernetzenden Monomereinheiten. Die Vernetzung ist ausreichend, wenn das vernetzte Polymerisat bei der Polymerisation der nachfolgenden Stufe durch das zugefügte Monomer nicht wesentlich angequollen wird. Man unterscheidet zwischen Kreuzvernetzern und Pfropfvernetzern. Zur Gruppe der Kreuzvernetzer gehören Monomere, die wenigstens zwei gut copolymerisierende Gruppen, z.B. Acryl- oder Methacrylreste, enthalten. Als Pfropfvernetzer werden Monomere bezeichnet, die neben einem Acryl- oder Methacrylrest noch eine äthylenisch ungesättigte Gruppe von deutlich geringerer Polymerisationsneigung, in der Regel eine Allylgruppe, enthalten. Für die Ziele der Erfindung ist in der Elastomerphase ein Anteil der Pfropfvernetzer von mindestens 0,5 %, besser von 0,8 bis 4 Gew.-%, bezogen auf das Gewicht der Elastomerphase, vorteilhaft. Er kann jedoch mit gleichguter Wirkung durch vernetzende Monomere, die drei oder mehr gut copolymerisierende Gruppen, wie z.B. Acryl- oder Methacrylgruppen, im Molekül enthalten, ersetzt werden. Dagegen erwiesen sich andere Kreuzvernetzer als entbehrlich, wenn auch in manchen Fällen bei einem Anteil von 0,05 bis 2 Gew.-% der Elastomerphase als förderlich.

Der Anteil des Pfropfvernetzers bzw. des an seiner Stelle verwendbaren Kreuzvernetzers mit drei oder mehr äthylenisch ungesättigten, radikalisch polymerisierbaren Resten wird vorzugsweise innerhalb der Grenzen von 0,5 bis 5 Gew.-% so gewählt, daß im fertigen Emulsionspolymerisat mindestens 15 Gew.-% der Hartphase mit der Elastomerphase kovalent verknüpft sind. Der Grad der Verknüpfung zeigt sich beim Auflösen einer aliquoten Menge des Emulsionspolymerisats in einem Lösemittel für die Hartphase. Dabei bleiben die Elastomerphase und der kovalent damit verknüpfte Anteil der Hartphase ungelöst. Das Gewicht des ungelösten Anteils soll um mindestens 15, vorzugsweise 30 bis 80 Gew.-% des berechneten Hartphasengewichts größer sein als die berechnete Gewichtssumme des Kerns und der Elastomerphase der aliquoten Probe.

Als Pfropfvernetzer sind die Allylester der Acryl- oder Methacrylsäure bevorzugt, jedoch sind auch andere der in US-A 3 808 180 und 3 843 753 genannten Pfropfvernetzer geeignet. Zu den vernetzenden Monomeren mit drei oder mehr äthylenisch ungesättigten, radikalisch polymerisierbaren Resten, wie Allylgruppen oder Acryl-oder Methacrylresten, die anstelle von Pfropfvernetzern verwendbar sind, gehören Triallylcyanurat, Trimethylolpropan-triacrylat und trimethacrylat, Pentaerythrit-triacrylat und trimethacrylat und verwandte Verbindungen, für die in DE-A 33 00 526 weitere Beispiele angegeben sind.

Das drei- oder mehrphasige Emulsionpolymerisat wird in herkömmlicher Weise durch drei- oder mehrstufige Emulsionspolymerisation in wäßriger Phase erzeugt. In der ersten Stufe wird der Kern erzeugt. Er soll eine mittlere Teichengröße von 100 bis 300 nm haben. Methoden zur Einstellung der gewünschten Teilchengröße sind dem Fachmann bekannt; vorteilhaft ist die Steuerung der Teilchengröße nach der Saatlatex-Methode.

Nach Abschluß der ersten Polymerisationsstufe wird in Gegenwart des Kerns in der zweiten Polymerisationsstufe die Elastomerphase erzeugt. Schließlich wird in der dritten Stufe, nachdem die zweite Polymerisationsstufe abgeschlossen ist, in gleicher Weise in Gegenwart des Emulsionspolymerisats der zweiten Stufe die abschließende Hartphase erzeugt.

Die Emulsionspolymerisation wird zweckmäßig in Gegenwart von anionischen Emulgatoren durchgeführt. Dazu zählen z.B. Paraffinsulfonate, Alkylsulfosuccinate und alkoxylierte und sulfierte Paraffine.

Als Polymerisationsinititiator werden z.B. 0,01 bis 0,5 Gew.-% an Alkali- oder Ammoniumperoxodisulfat, bezogen auf die Wasserphase, eingesetzt und die Polymerisation wird bei Temperaturen von 20 bis 100 Grad C ausgelöst. Bevorzugt arbeitet man mit Redoxsystemen, beispielsweise aus 0,01 bis 0,05 Gew.-% organischen Hydroperoxiden und 0,05 bis 0,15 Gew.-% Rongalit® bei Temperaturen von 20 bis 80 Grad C. Bei der Polymerisation der Hartphase wird in der Regel eine geeignete Menge eines Kettenübertragungsmittels, z.B. eines Mercaptans, mitverwendet, um das Molekulargewicht des Hartphasenpolymerisats an das der Formmasse anzugleichen, die mit dem dreiphasigen Emulsionspolymerisat modifiziert werden soll.

### Verarbeitung des Emulsionspolymerisats zur Formmasse

Das Emulsionspolymerisat fällt in Form einer wäßrigen Dispersion mit einem Feststoffgehalt von 30 bis 60 Gew.-% an. Das Emulsionspolymerisat kann aus der Dispersion beispielsweise durch Sprühtrocknen, Gefrierkoagulieren, Ausfällen durch Elektrolytzusatz oder durch mechanische oder thermische Belastung, wie sie gemäß DE-A 2 750 682 oder US-A 4 110 843 mittels eines Entgasungsextruders durchführbar ist, gewonnen werden. Das Verfahren der Sprühtrocknung ist am gebräuchlichsten, obwohl die anderen genannten Verfahren den Vorzug haben, daß dabei die wasserlöslichen Polymerisationshilfsstoffe wenigstens teilweise von dem Polymerisat abgetrennt werden.

Das erfindungsgemäße Schlagzäh-Modifizierungsmittel dient zur Verbesserung der Schlagzähigkeit von harten thermoplastischen Kunststoffen, die mit der Hartphase verträglich sind, vorzugsweise von Polymethylmethacrylat. Auch harte Mischpolymerisate des Methylmethacrylats mit Acrylestern, Acrylnitril oder mit Maleinsäureanhydrid und Styrol sowie Polyvinylchlorid kommen in Betracht. In der Regel werden 100 Teilen der zu modifizierenden Formmasse 10 bis 60 Teile des Schlagzäh-Modifizierungsmittels zugemischt.

Derartige Mischungen können auf verschiedene Weise hergestellt werden. Man kann z.B. die Dispersion des gemäß der Erfindung hergestellten Emulsionspolymerisats mit einer wäßrigen Dispersion der Abmischkomponente vermischen und die Mischung koagulieren, die Wasserphase abtrennen und das Koagulat zu einer Formmasse verschmelzen. Bei diesem Verfahren läßt sich eine besonders gleichmäßige Vermischung der beiden Massen erzielen. Die Komponenten können auch getrennt hergestellt und isoliert und in Form ihrer Schmelzen oder als Pulver oder Granulate gemischt und in einem Mehrschneckenextruder oder auf einem Walzenstuhl homogenisiert werden.

Übliche Zusätze können in jeder dazu geeigneten Verarbeitungsstufe zugemischt werden. Dazu zählen Farbstoffe, Pigmente, Füllstoffe, Verstärkungsfasern, Gleitmittel, UV-Schutzmittel usw.

Abmischungen des Schlagzäh-Modifizierungsmittels, insbesondere mit Polymethylmethacrylat, eignen sich z.B. zur Herstellung von Formkörpern mit einer Wanddicke über 1 mm wie extrudierten Bahnen von 1 bis 10 mm Dicke, die sich gut stanzen lassen und beispielsweise zur Herstellung bedruckbarer Blenden für Elektrogeräte brauchbar sind, oder zur Herstellung von gespritzten Formkörpern hoher Qualität, z.B. Kraftfahrzeugscheiben. Dünnere Folien von z.B. 50 Mikrometer Dicke können ebenfalls daraus hergestellt werden.

### BEISPIELE

In den nachfolgenden Beispielen werden für die verwendeten Ausgangsstoffe folgende Abkürzungen verwendet:

| | |
|---|---|
| MMA | Methylmethacrylat |
| BA | n-Butylacrylat |
| EA | Ethylacrylat |
| BzA | Benzylacrylat |
| ALMA | Allylmethacrylat |
| PPA | 1-Phenyl-propyl-3-acrylat |
| S | Styrol |
| | |
| BHP | tert.-Butylhydroperoxid |
| KPS | Kaliumperoxodisulfat |
| EM | Emulgator aus Tri-isobutylphenol + 6 Mol Ethylenoxid, sulfatiert, Na-Salz |
| RON | Na-Hydroxymethylsulfinat (Rongalit® c) |
| PSN | C₁₅-Paraffinsulfonat-Na |
| | |
| T | steht für Gewichtsteile |

### Beispiele 1 - 3

In einem Polymerisationsreaktor mit Rühreinrichtung werden vorgelegt: 257 T Wasser, 0,15 T EM, 0,004 T Fe(II)-Sulfat-7 H₂O, 109 T MMA, 0,66 T ALMA. Die Mischung wird durch Rühren emulgiert und auf 50°C erwärmt. Der Emulsion werden 4,17 T eines Saatlatex, enthaltend 30 Gew.-% PMMA, Teilchengröße 75 nm (Nanosizer-Messung) zugesetzt. Zur Durchführung der Polymerisation wird eine wäßrige Lösung von 0,05 T KPS und 0,076 T Na-disulfit allmählich zudosiert. Wenn das Temperaturmaximum überschritten ist, werden 0,6 T PSN und anschließend 0,26 T Na-Disulfit zugesetzt. Im Laufe von zwei Stunden wird eine Emulsion I (vgl. Tabelle 2) zur Bildung der Elastomerphase gleichmäßig zudosiert. Danach werden 0,16 T RON zugesetzt und im Laufe der nächsten 2 Stunden die Emulsion II, bestehend aus 96,7 T Wasser, 216 T MMA, 4,4 T EA, 0,22 T PSN, 0,16 T RON, 0,12 T BHP und 0,5 T Dodecylmercaptan, zur Bildung der Hartphase allmählich zudosiert. Die erhaltene Dispersion wird abgekühlt und filtriert.

Der Feststoff wird aus der Dispersion durch Gefrierkoagulation gewonnen. Dazu wird die Dispersion auf -25^{o}C gekühlt, wieder aufgetaut und abfiltriert. Der Rückstand wird bei 80^{o}C getrocknet.

Zur Herstellung einer schlagzähen Formmasse wird das getrocknete Emulsionspolymerisat mit einer solchen Menge einer handelsüblichen PMMA-Formmasse (PLEXIGLAS® 7N, Röhm GmbH) im Extruder gemischt, daß der Gehalt an polymerisiertem Butylacrylat in der Gesamtmischung 14 Gew.-% beträgt, und thermoplastisch zu den erforderlichen Prüfkörpern geformt.

**Tabelle 2**

| Zusammensetzungen der Emulsionen I: | | | |
|---|---|---|---|
| Beispiel Nr. | 1 | 2 | 3 |
| Wasser | 96,7 | 96,7 | 96,7 |
| PSN | 0,37 | 0,37 | 0,37 |
| KPS | 0,16 | 0,16 | 0,16 |
| BA | 158 | 158 | 147 |
| BzA | 59,4 | 59,4 | -- |
| PPA | -- | -- | 70,4 |
| ALMA | 2,6 | 2,2 | 2,6 |
| Na-Disulfit | 0,26 | 0,26 | 0,26 |

In der nachfolgenden Tabelle 3 sind die Eigenschaften der schlagzähen Formmassen aufgeführt. Als Vergleich werden in Spalte V die Eigenschaften einer Formmasse angegeben, die in entsprechender Weise unter Verwendung eines handelsüblichen Schlagzäh-Modifizierungsmittels (PLEXIGLAS® ZK6A Röhm GmbH) erhalten worden ist.

**Tabelle 3**

| Beispiel Nr. | 1 | 2 | 3 | V |
|---|---|---|---|---|
| Vicat-Erweichungs-Temperatur in °C nach 16 h/80°C | 98 | 97 | 97 | 98 |
| Kerbschlagzähigkeit (Izod) in kJ/m² | | | | |
| bei 23°C | 7,0 | 6,8 | 6,2 | 5,9 |
| bei -10°C | 4,7 | 4,7 | 4,7 | 3,6 |
| bei -20°C | - | 3,4 | 3,6 | 2,8 |
| Trübung (Haze %) | | | | |
| bei 23°C | 3,9 | 3,6 | 4,4 | 2,3 |
| bei 40°C | 3,7 | 3,4 | 5,8 | 3,1 |
| Weißbruch nach Belastung | 7 | 8 | 7 | 10 |

Vergleichsversuche
mit zweiphasigen Emulsionspolymerisaten mit elastomerem Kern unter Verwendung von Styrol und von Benzylacrylat.

In einem Rührgefäß wird eine wäßrige Phase aus 125 T Wasser und 0,025 T EM vorgelegt und auf 80°C erwärmt. Nach Zugabe von 0,15 T KPS läßt man innerhalb 2,5 Stunden die Emulsion I und innerhalb weiterer 1,5 Stunden die Emulsion II gleichmäßig zulaufen; ihre Zusammensetzung ist in Tabelle 4 angegeben. Anschließend wird 1 Stunde bei 80°C nachgerührt, abgekühlt und filtriert. Das Emulsionspolymerisat wird wie bei den Beispielen 1 - 3 durch Gefrierkoagulation gewonnen und mit PMMA-Formmasse zu Prüfkörpern verarbeitet.

**Tabelle 4**

| Zusammensetzung der Emulsionen I und II (T) | | | |
|---|---|---|---|
| | Emuls.I Versuch A | Emuls.I Versuch B | Emuls.II Versuche A u.B |
| Wasser | 225 | 225 | 150 |
| EM | 0,62 | 0,62 | 0,31 |
| KPS | 0,31 | 0,31 | 0,26 |
| BA | 215,4 | 247,4 | - |
| BzA | 81,0 | -- | - |
| S | -- | 48,9 | - |
| MMA | -- | -- | 196 |
| EA | -- | -- | 4 |
| ALMA | 3,6 | 3,6 | - |
| Dodecylmercaptan | | -- | 0,5 |

Die Eigenschaften der modifizierten PMMA-Formmassen gemäß den Vergleichsversuchen A und B sowie eine nach Beispiel 1 der FR-A 2 189 440 hergestellte Formmasse C werden in Tabelle 5 der erfindungsgemäßen Formmasse nach Beispiel 3 gegenübergestellt.

**Tabelle 5**

| Vergl. bzw. Beisp. | A | B | C | 3 |
|---|---|---|---|---|
| Vicat-Erweichungs-Temperatur in °C nach 16 h/80°C | 96 | 96 | 98 | 97 |
| Kerbschlagzähigkeit (Izod) in kJ/m² | | | | |
| bei 23°C | 3,2 | 3,6 | 4,9 | 7,0 |
| bei -10°C | 1,8 | 1,7 | 2,3 | 4,7 |
| bei -20°C | 1,7 | 1,8 | 1,6 | 3,4 |
| Trübung (Haze %) | | | | |
| bei 23°C | 2,0 | 3,8 | 3,3 | 3,6 |
| bei 40°C | 7,5 | 11,7 | 10,0 | 3,4 |
| Weißbruch nach Belastung | 48,5 | 48,3 | - | 8,0 |

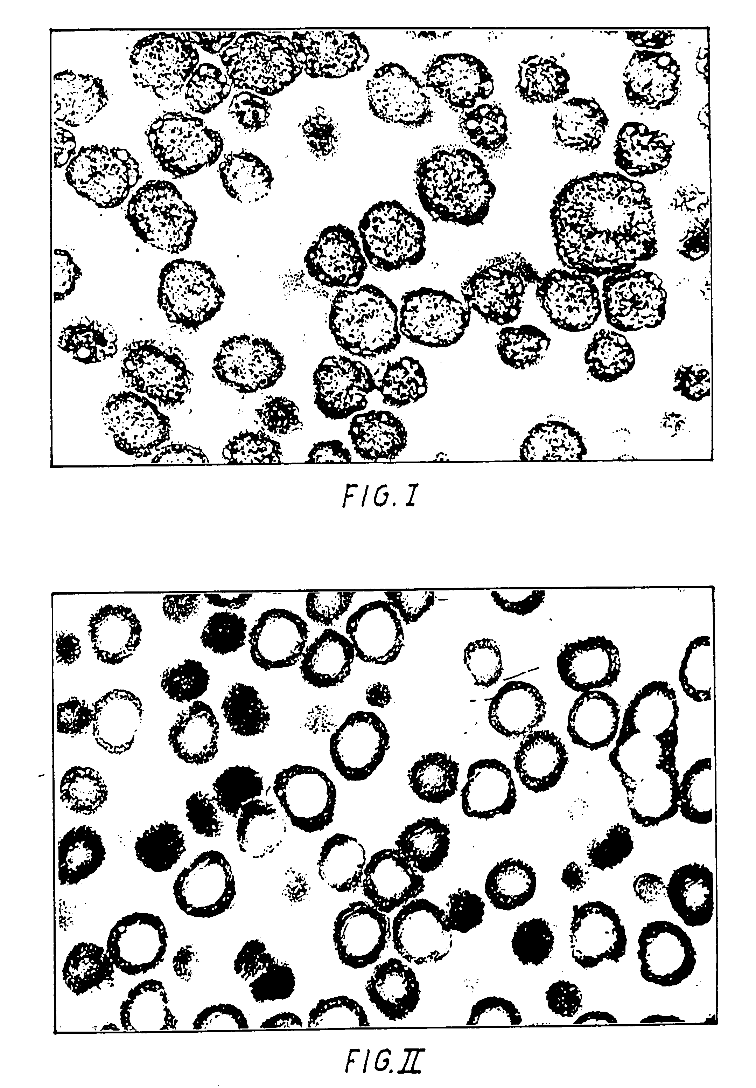

## Patentansprüche

1. Schlagzäh-Modifizierungsmittel für thermoplastische Kunststoffe, bestehend aus einem wenigstens dreiphasigen Emulsionspolymerisat, enthaltend
A) einen harten Kern aus einem gegebenenfalls vernetzten Polymethylmethacrylat
B) einer in Gegenwart des Kernmaterials erzeugten Elastomerphase mit einer Glasübergangstemperatur nicht über -10°C, die aufgebaut ist aus
a) einem Alkylester der Acrylsäure mit 1 bis 8 Kohlenstoffatomen im Alkylrest,
b) wenigstens einem vernetzenden Comonomeren mit zwei oder mehr polymerisierbaren Doppelbindungen im Molekül,
c) wenigstens einem Arylalkyl(meth)acrylat in Anteilen von 15-45 Gew.-% bezogen auf die Elastomerphase und
C) einer in Gegenwart der Elastomerphase erzeugten Hartphase aus einem Homo- oder Copolymerisat von äthylenisch ungesättigten, radikalisch polymerisierbaren Monomeren mit einer Glasübergangstemperatur von wenigstens 50°C.

2. Schlagzäh-Modifizierungsmittel nach Anspruch 1, dadurch gekennzeichnet, daß die Elastomerphase aus
a) 85 bis 50 Gew.-% des Alkylesters der Acrylsäure mit 1 bis 8 Kohlenstoffatomen im Alkylrest,
b) 0,5 bis 5 Gew.-% des vernetzenden Comonomeren mit zwei oder mehr polymerisierbaren Doppelbindungen im Molekül,
c) 15 bis 45 Gew.-% des Arylalkyl(meth)acrylats
aufgebaut ist.

3. Schlagzäh-Modifizierungsmittel nach Anspruch 1 oder 2, dadurch gekennzeichnet, daß die Hartphase ganz oder zu wenigstens 50 Gew.-% aus Methylmethacrylat aufgebaut ist.

4. Schlagzäh-Modifizierungsmittel nach einem oder mehreren der Ansprüche 1 bis 3, dadurch gekennzeichnet, daß es, bezogen auf das Emulsionspolymerisat,
A) 5 bis 40 Gew.-% der Kernphase,
B) 25 bis 75 Gew.-% der Elastomerphase,
C) 20 bis 60 Gew.-% der Hartphase enthält.

5. Thermoplastische Formmasse, zusammengesetzt aus dem Schlagzäh-Modifizierungsmittel nach Anspruch 1 bis 4 und einem thermoplastischen Kunststoff von geringerer Schlagzähigkeit im Gewichtsverhältnis von 10 : 1 bis 1 : 100.

6. Thermoplastische Formmasse nach Anspruch 5, dadurch gekennzeichnet, daß sie als thermoplastischen Kunststoff von geringerer Schlagzähigkeit Polymethylmethacrylat oder ein zu wenigstens 70 Gew.-% aus Methylmethacrylat aufgebautes Mischpolymerisat enthält.

## Claims

1. An impact-resistant modifier for thermoplastic materials comprising an at least three-phase emulsion polymer, comprising
A) a hard core of an optionally cross-linked polymethylmethacrylate
B) an elastomer phase with a glass transition temperature not higher than -10°C, produced in the presence of the core material and synthesised from
a) an alkyl ester of acrylic acid having 1 to 8 carbon atoms in the alkyl group,
b) at least one cross-linking comonomer with two or more polymerisable double bonds in the molecule,
c) at least one arylalkyl(meth)acrylate in amounts of 15-45 wt.% based on the elastomer phase, and
C) a hard phase produced in the presence of the elastomer phase and comprising a homo- or copolymer of ethylenically unsaturated, radically polymerisable monomers with a glass transition temperature of at least 50°C.

2. An impact-resistant modifier according to claim 1, characterised in that the elastomer phase is synthesised from
a) 85 to 50 wt.% of alkyl esters of acrylic acid having 1 to 8 carbon atoms in the alkyl group,
b) 0.5 to 5 wt.% of the crosslinking comonomer having 2 or more polymerisable double bonds in the molecule,
c) 15 to 45 wt.% of arylalkyl(meth)acrylates.

3. An impact-resistant modifier according to claim 1 or 2, characterised in that the hard phase is synthesised, either completely or in an amount of at least 50 wt.%. from methylmethacrylate.

4. An impact-resistant modifier according to one or more of claims 1 to 3, characterised in that it comprises, based on the emulsion polymer,
A) 5 to 40 wt.% of the core phase,
B) 25 to 75 wt.% of the elastomer phase,
C) 20 to 60 wt.% of the hard phase.

5. A thermoplastic moulding compound comprising the impact-resistant modifier according to claim 1 to 4 and a thermoplastic material with lower impact resistance, in the weight ratio of 10 : 1 to 1 : 100.

6. A thermoplastic moulding compound according to claim 5, characterised in that it comprises polymethylmethacrylate or a copolymer synthesised, in an amount of at least 70 wt.%, from methylmethacrylate as the thermoplastic material with a lower impact resistance.

## Revendications

1. Agent de modification de la résilience pour matières thermoplastiques, se composant d'un produit de polymérisation en émulsion à trois phases au moins, contenant
A) un noyau dur en un poly(méthacrylate de méthyle) éventuellement réticulé.
B) une phase élastomère produite en présence de la matière du noyau, ayant une température de transition vitreuse non supérieure à -10°C, qui se compose
a) d'un ester alkylique de l'acide acrylique à 1-8 atomes de carbone dans le reste alkyle.
b) d'au moins un comonomère réticulant à deux doubles liaisons polymérisables ou plus dans la molécule, c) d'au moins un (méth)acrylate d'arylalkyle dans
des proportions de 15 à 45% en poids par rapport à la phase élastomère,
et
C) une phase dure produite en présence de la phase elastomère, en un homo- ou copolymère de monomères à insaturation éthylénique susceptibles de polymérisation radicalaire, ayant une température de transition vitreuse de 50°C au moins.

2. Agent de modification de la résilience selon la revendication 1, caractérisé en ce que la phase élastomère est composée de
a) 85 à 50% en poids de l'ester alkylique de l'acide acrylique à 1-8 atomes de carbone dans le reste alkyle,
b) 0,5 à 5% en poids du comonomère réticulant à deux doubles liaisons polymérisables ou plus dans la molécule,
c) 15 à 45% en poids du (méth)acrylate d'arylalkyle.

3. Agent de modification de la résilience selon la revendication 1 ou 2, caractérisé en ce que la phase dure est composée en totalité ou pour 50% en poids au moins de méthacrylate de méthyle.

4. Agent de modification de la résilience selon l'une quelconque des revendications 1 à 3, caractérisé en ce qu'il contient, par rapport au produit de polymérisation en émulsion,
A) 5 à 40% en poids de la phase de noyau,
B) 25 à 75% en poids de la phase élastomère,
C) 20 à 60% en poids de la phase dure.

5. Masse à mouler thermoplastique, composée de l'agent de modification de la résilience selon l'une quelconque des revendications 1 à 5 et d'une matière thermoplastique de plus faible résilience, dans un rapport pondéral de 10:1 à 1:100.

6. Masse à mouler thermoplastique selon la revendication 5, caractérisée en ce qu'elle contient, comme matière thermoplastique de plus faible résilience, du poly(méthacrylate de méthyle) ou un copolymlère composé de méthacrylate de méthyle pour 70% en poids au moins.
